(19) Europäisches Patentamt
European Patent Office
Office européen des brevets

(11) **EP 2 425 557 B1**

(12) **EUROPÄISCHE PATENTSCHRIFT**

(45) Veröffentlichungstag und Bekanntmachung des Hinweises auf die Patenterteilung:
**19.03.2014 Patentblatt 2014/12**

(21) Anmeldenummer: **10718499.6**

(22) Anmeldetag: **26.03.2010**

(51) Int Cl.:
**H04B 10/116** (2013.01)

(86) Internationale Anmeldenummer:
**PCT/EP2010/053981**

(87) Internationale Veröffentlichungsnummer:
**WO 2010/124917 (04.11.2010 Gazette 2010/44)**

(54) **VERFAHREN UND VORRICHTUNG ZUR OPTISCHEN ÜBERTRAGUNG VON DATEN**

METHOD AND APPARATUS FOR THE OPTICAL TRANSMISSION OF DATA

PROCÉDÉ ET DISPOSITIF DE TRANSMISSION OPTIQUE DE DONNÉES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **28.04.2009 DE 102009019203
27.01.2010 DE 102010005885**

(43) Veröffentlichungstag der Anmeldung:
**07.03.2012 Patentblatt 2012/10**

(73) Patentinhaber:
• **Siemens Aktiengesellschaft
80333 München (DE)**
• **Fraunhofer-Gesellschaft zur Förderung der angewandten Forschung e.V.
80686 München (DE)**

(72) Erfinder:
• **LANGER, Klaus-Dieter
10781 Berlin (DE)**
• **WALEWSKI, Joachim
82008 Unterhaching (DE)**

(56) Entgegenhaltungen:
**WO-A1-2008/001262 WO-A1-2009/010909**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 425 557 B1

**Beschreibung**

Die Erfindung betrifft ein Verfahren und eine Vorrichtung zur optischen Übertragung von Daten mittels einer pulsbreitenmodulierten Lichtquelle.

WO 2008/001262 A1 betrifft die Licht-Modulation eines SSL-Geräts (SSL: Solid State Lighting). Die Lichtemission wird moduliert, indem jeder Impuls einer Sequenz von Impulsen eines Steuersignals entsprechend eines Spreizcodes getastet wird. Somit kann das emittierte Licht anhand des Spreizcodes identifiziert werden.

Die weite Verbreitung von mobilen Endgeräten, wie beispielsweise mobilen Telefonen, erfordert die schnelle Datenübertragung über drahtlose Schnittstellen und drahtlose lokale Datennetzwerke. In Gebäuden können lichtemittierende Dioden (LED) zur Beleuchtung von Räumen eingesetzt werden. Lichtemittierende Dioden, auch Leuchtdioden genannt, zeichnen sich durch einen niedrigen Energieverbrauch und eine lange Lebensdauer aus. Zur Beleuchtung von Räumen innerhalb von Gebäuden werden dort vorgesehene Leuchtdioden gedimmt, um die Beleuchtungsstärke innerhalb eines Raumes entsprechend den jeweiligen Anforderungen einstellen zu können.

Es ist eine Aufgabe der vorliegenden Erfindung, ein Verfahren und eine Vorrichtung zur optischen Übertragung von Daten über eine dimmbare Lichtquelle zu schaffen.

Diese Aufgabe wird erfindungsgemäß durch ein Verfahren mit den im Patentanspruch 1 angegebenen Merkmalen gelöst.

Die Erfindung schafft ein Verfahren zur optischen Übertragung von Daten mittels einer pulsbreitenmodulierten Lichtquelle, bei dem ein zur Helligkeitssteuerung der pulsbreitenmodulierten Lichtquelle eingestelltes Tastverhältnis als Verhältnis zwischen einer Dunkelzeit der Lichtquelle und einer Periodenlänge eines Pulsbreitenmodulationszyklus definiert ist.

Erfindungsgemäß wird dabei ein zyklusabhängiges Tastverhältnis über eine Mehrzahl von Pulsbreitenmodulationszyklen jeweils so variiert, dass über die Variation des zyklusabhängigen Tastverhältnisses die zu übertragenen Daten kodiert werden. Der Wert eines über die Mehrzahl von zyklusabhängigen Tastverhältnissen gebildeten arithmetischen Mittels entspricht dabei im Wesentlichen dem eingestellten Tastverhältnis.

Die Erfindung ist von der Idee getragen, das eingestellte Tastverhältnis, welches einer über einen Dimmfaktor eingestellten Helligkeit der pulsbreitenmodulierten Lichtquelle entspricht, insofern unverändert zu lassen, dass über eine Mehrzahl von Pulsbreitenmodulationszyklen gesehen sich ein durchschnittliches Tastverhältnis ergibt, welches dem eingestellten Tastverhältnis entspricht.

Mit anderen Worten wird erfindungsgemäß das Tastverhältnis in einzelnen Zeitabschnitten so geändert, dass eine Übertragung von Daten mittels einer Kodierung über das kurzzeitig veränderte Tastverhältnis ermöglicht wird, ohne dass die mittels einer Pulsbreitenmodulation eingestellte Helligkeit insgesamt eine Veränderung erfährt.

Dabei wird erfindungsgemäß die Trägheit des menschlichen Auges ausgenutzt, welche eine kurzzeitige Änderung in der Pulsbreitenmodulation nicht als wahrnehmbare Helligkeitsunterschiede wahrnehmen kann. Dieses Prinzip wird im Übrigen bereits durch die Pulsbreitenmodulation zur Helligkeitssteuerung selbst angewandt.

Gemäß einer bevorzugten Ausgestaltungsform der Erfindung ist die Lichtquelle als lichtemittierende Diode ausgeführt, welche, neben den in der Einleitung genannten Vorteile, insbesondere den Vorteil einer kurzen und präzisen Anschaltzeit bietet.

Die Erfindung wird vorzugsweise für einen drahtlosen Austausch zwischen der Lichtquelle und einem mobilen Endgerät eingesetzt.

Gemäß einer Ausführungsform der Erfindung erfolgt eine Datenübertragung in Form von Symbolen, wobei ein Symbol aus einem oder mehreren binären Bits besteht.

Gemäß einer Ausführungsform der Erfindung wird der Wert eines jeweiligen Symbols zumindest teilweise durch eine Dauer der Dunkelzeit der Lichtquelle innerhalb des Pulsbreitenmodulationszyklus kodiert. Gemäß einer alternativen bevorzugten Ausgestaltung der Erfindung wird der Wert des jeweiligen Symbols zumindest teilweise durch die Dauer einer Hellzeit der Lichtquelle innerhalb des Pulsbreitenzyklus kodiert. Die beiden letztgenannten Ausführungsformen sind also Manifestationen des Grundgedankens der Erfindung, Informationen über das zyklusabhängige Tastverhältnis zu übertragen.

Gemäß einer weiteren Ausführungsform der Erfindung wird der Wert eines Symbols weiterhin durch eine Anordnung der Dunkelzeit der Lichtquelle innerhalb des Pulsbreitenmodulationszyklus kodiert. Diese Ausgestaltung der Erfindung entspricht einer Pulspositionsmodulation, bei der, unbeschadet des eingestellten Tastverhältnisses, eine Anordnung von Dunkel- und Hellzeit verändert wird. In der einfachsten Ausgestaltung dieser Ausführungsform kann dabei die Hellzeit - d.h. Lichtquelle eingeschaltet - mit der Dunkelzeit - d.h. Lichtquelle ausgeschaltet - vertauscht werden, um auf diese Weise ein weiteres binäres Bit zu kodieren. Auch die Pulspositionsmodulation führt nicht zu einer wahrnehmbaren Änderung in der eingestellten Helligkeit.

Gemäß einer weiteren Ausführungsform der Erfindung ist eine Unterteilung der Hellzeit innerhalb des Pulsbreitenmodulationszyklus derart vorgesehen, dass ein erster Hellzeitbereich in verschiedenen Pulsbreitenmodulationszyklen konstant bleibt, und ein zweiter Hellzeitbereich ein jeweils ganzzahliges Vielfaches eines minimalen zweiten Hellzeitbereichs ist, wobei der Wert des ganzzahligen Vielfaches einem dezimalen Wert des Symbols entspricht. Diese Ausgestaltung bietet den Vorteil, dass über den konstanten ersten Hellzeitbereich eine Synchronisierung der Kommunikationspartner ermöglicht wird, während der zweite Hellzeitbereich aufgrund einer ganzzahligen Multiplikation mit einem minimalen Hellzeitbereich auf einfache Weise zu kodieren und/oder dekodieren ist.

Die Erfindung schafft ferner eine Vorrichtung zur optischen Übertragung von Daten mittels einer pulsbreitenmodulierten Lichtquelle.

Im Weiteren werden bevorzugte Ausführungsformen der erfindungsgemäßen Vorrichtung und des erfindungsgemäßen Verfahrens zur optischen Übertragung von Daten mittels einer pulsbreitenmodulierten Lichtquelle unter Bezugnahme auf die Zeichnung zur Erläuterung erfindungswesentlicher Merkmale beschrieben.

Es zeigen:

Figur 1a      eine Prinzipdarstellung einer pulsbreitenmodulierten Lichtquelle gemäß dem Stand der Technik;

Figur 1b      eine Prinzipdarstellung einer Ausführungsform der erfindungsgemäßen Vorrichtung zur optischen Übertragung von Daten mittels einer pulsbreitenmodulierten Lichtquelle;

Figur 2a      ein Signaldiagramm zur Erläuterung der Funktionsweise einer pulsbreitenmodulierten Lichtquelle gemäß dem Stand der Technik; und;

Figur 2b      ein Signaldiagramm zur Erläuterung der Funktionsweise des erfindungsgemäßen Verfahrens zur optischen Übertragung von Daten mittels einer pulsbreitenmodulierten Lichtquelle.

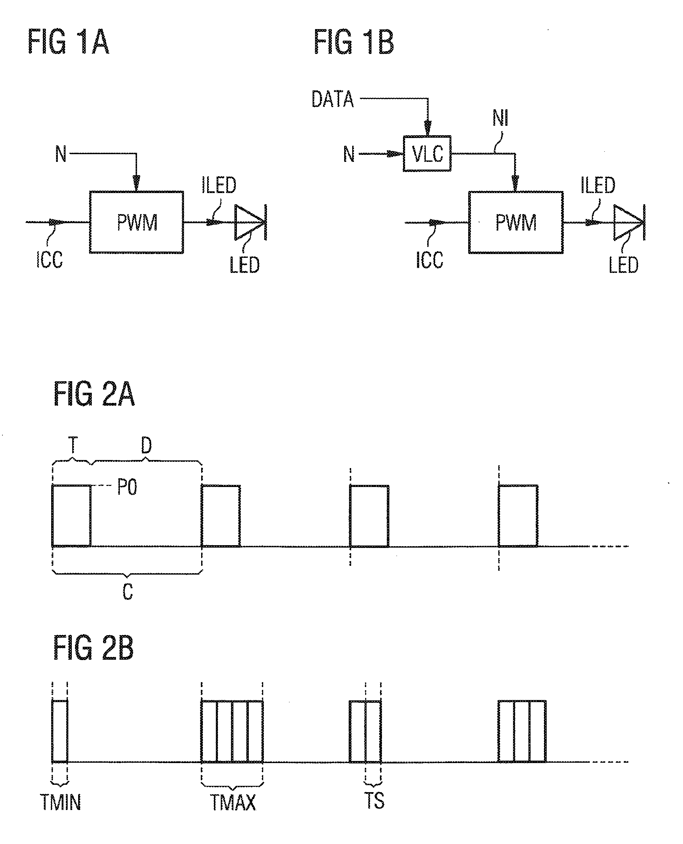

Figur 1a zeigt eine aus dem Stand der Technik bekannte Vorrichtung, bestehend aus einer Lichtquelle LED, einem Pulsbreitenmodulator PWM, durch den ein pulsbreitenmoduliertes Trägersignal generiert wird. Der Pulsbreitenmodulator PWM wird mit einem Versorgungsstrom ICC gespeist. Der Versorgungsstrom ICC ist beispielsweise ein Gleichstrom mit wählbarer Größe. Eine Helligkeitssteuerung der Lichtquelle LED erfolgt mittels einer Einstellung eines Dimmfaktor N, wobei beispielsweise eine Stellgröße eines entsprechenden - nicht dargestellten - Einstellglieds den Dimmfaktor beeinflusst und die Stellgröße an den Pulsbreitenmodulator PWM zugeführt wird. Der Dimmfaktor N entspricht dabei einem Tastverhältnis des vom Pulsbreitenmodulator PWM aufgrund des eingestellten Dimmfaktors erzeugten Stroms ILED, welche eine Pulsbreitenmodulation aufweist, die in ihrem zeitlichen Verlauf einem im Folgenden gezeigten Verlauf der optischen Leistung der Lichtquelle LED entspricht.

Die weitere Figurenbeschreibung erfolgt unter weiterer Bezugnahme auf die Funktionseinheiten von jeweils vorausgehenden Figuren. Identische Bezugszeichen in verschiedenen Figuren repräsentieren hierbei identische Funktionseinheiten.

Figur 2a zeigt einen zeitlichen Verlauf der optischen Leistung der Lichtquelle LED, wobei der zeitliche Verlauf der optischen Leistung sich in Folge des in seinem Verlauf im Wesentlichen identischen pulsbreitenmodulierten Stroms ILED einstellt.

In Figur 2a sind vier Pulsbreitenmodulationszyklen C dargestellt, wobei ein jeweiliger Zyklus C aus einer jeweiligen Hellzeit T und Dunkelzeit D besteht. In der Zeichnung ist diens aus Übersichtsgründen lediglich für den ersten ganz links abgebildeten Pulsbreitenmodulationszyklus C dargestellt.

Während der Hellzeit T ist die Lichtquelle angesteuert und strahlt eine optische Leistung mit einem optischen Leistungsbetriebswert P0 aus. Während der Dunkelzeit D ist die Lichtquelle abgeschaltet und strahlt eine Leistung ab, die im Wesentlichen gleich Null ist.

Die Pulsbreitenmodulation der Lichtquelle LED dient einer Einstellung der optischen Leistung, wobei die Trägheit des menschlichen Auges dergestalt ausgenutzt wird, dass aufgrund der zeitlichen Länge eines Zyklus C die Hellzeiten T und Dunkelzeiten D als kontinuierliche optische Leistung empfunden werden.

Abhängig vom Dimmfaktor N, welcher in der folgenden mathematischen Notierung als $\eta$ gekennzeichnet wird und der sich als Quotient zwischen der Dunkelzeit D - in der folgenden mathematischen Notierung als $T_d$ gekennzeichnet - innerhalb eines Zyklus C sowie der Zyklusdauer C - in der folgenden mathematischen Notierung als $T_C$, gekennzeichnet - ergibt,

$$\eta = \frac{T_d}{T_c} \tag{1}$$

ist die Helligkeit der Lichtquelle LED variierbar. Der Dimmfaktor $\eta$ ist identisch mit dem gleichfalls als Quotient zwischen der Dunkelzeit D sowie der Zyklusdauer C definierten Tastverhältnis.

Bei einem Dimmfaktor $\eta$=1 wird die optisch abgestrahlte Leistung zu 0, d.h. völlige Dunkelheit, bei einem Dimmfaktor $\eta$=0 entspricht die wahrgenommene optische Leistung dem optischen Leistungsbetriebswert P0, d.h. der maximal vorgesehenen Helligkeit.

Der in Figur 2a zeichnerisch dargestellte Dimmfaktor $\eta$ ergibt sich zu ca.0,77.

Der vorliegenden Erfindung liegt nun die Aufgabe zugrunde, Maßnahmen zu schaffen, um die gemäß der Figur 2a pulsweitenmodulierte Lichtquelle LED zusätzlich zur optischen Übertragung von Daten vorzusehen.

Die Erfindung löst die gestellte Aufgabe dadurch, dass der Dimmfaktor $\eta$ von einem Zyklus C zum nächsten Zyklus C variiert wird, wobei die Variation so gewählt wird, dass über ein für das menschliche Auge auflösbares Zeitintervall der mittlere Dimmfaktor dem eingestellten Dimmfaktor $\eta$ entspricht. Mit anderen Worten wird erfindungsgemäß ein zyklusabhängiger Dimmfaktor $\eta_i$ über eine Mehrzahl N einzelner Zyklen i so variiert, dass über die Variation des zyklusabhängigen Dimmfaktors $\eta_i$ die zu übertragenden Daten kodiert werden, wobei der Wert eines über eine Mehrzahl von Zyklus abhängigen Dimmfaktoren $\eta_i$ gebildeten arithmetischen Mittels

$$\eta = \frac{1}{N} \sum_{i=1}^{N} \eta_i \qquad (2)$$

im Wesentlichen dem zum Zwecke der Helligkeitssteuerung der Lichtquelle LED eingestellten Dimmfaktor $\eta$ entspricht.

Die genannte Mehrzahl N von zyklusabhängigen Tastverhältnissen $\eta_i$ wird dabei beispielsweise über eine Mehrzahl von Zyklen C gebildet, deren Summe ein für das menschliche Auge auflösbares Zeitintervall entspricht. Ein solches für das menschliche Auge auflösbare Zeitintervall wird beispielsweise in einem Bereich um 50 Millisekunden gewählt.

Figur 2b zeigt ein zeitliches Ablaufdiagramm einer Pulsbreitenmodulation in Anwendung der erfindungsgemäßen Mittel. Wie in Figur 2a ist auch in der Figur 2b die optische Leistung der Lichtquelle LED auf der Ordinate über die Zeitabszisse aufgetragen.

Zunächst wird in der Darstellung Bezug genommen auf den linken Teil der Figur 2b, wobei die zeitliche Dauer der Hellzeit T zwischen einem minimalen Wert TMIN und einem maximalen Wert TMAX variiert.

Figur 2b zeigt im ersten Pulsbreitenmodulationszyklus C einen ersten Hellzeitbereich mit einer zeitlichen Dauer von TMIN, gefolgt von einem weiteren Pulsbreitenmodulationszyklus C mit einer Hellzeit TMAX, welche einer vierfachen Dauer von TMIN entspricht, wiederum gefolgt von einem weiteren Pulsbreitenmodulationszyklus C mit einer Hellzeit, welche einer zweifachen minimalen Hellzeit TMIN entspricht, schließlich gefolgt von einem Pulsbreitenmodulationszyklus C mit einer Hellzeit T, welche einer dreifachen Dauer der minimalen Hellzeit TMIN entspricht.

In der folgenden mathematischen Notierung wird die minimale Hellzeit TMIN als $T_t{}^{min}$ gekennzeichnet und die maximale Hellzeit TMAX als $T_t{}^{max}$ gekennzeichnet. Die zyklusabhängigen Hellzeit, welche sich zwischen einem Wert von $T_t{}^{min}$ nund $T_t{}^{max}$ bewegt, wird im Folgenden als $T_{t,i}$ bezeichnet.

Die Länge, bzw. zeitliche Dauer, einer zyklusabhängigen Hellzeit $T_{t,i}$ wird in einer Ausführungsform der Erfindung so gewählt, dass deren zeitliche Dauer einen Symbolwert der zu übertragenden Daten kodiert. In dieser Ausführungsform wird dabei eine identische zeitliche Dauer der minimalen Hellzeit $T_t{}^{min}$ und eines im Folgenden erläuterten Symbolschritts gewählt. Zur Einstellung einer Vielzahl von zyklusabhängigen Dimmfaktoren $\eta_i$ kann diese identische zeitliche Dauer auch zugunsten beliebiger Verhältnisse zwischen der minimalen Hellzeit $T_t{}^{min}$ und des Symbolschritts gewählt werden.

Der Wert des zyklausabhängigen Dimmfaktors $\eta_i$ ergibt sich als Quotient

$$\eta_i = \frac{T_{d,i}}{T_c} \qquad (3)$$

der zyklusabhängigen Dunkelzeit $T_{d,i}$ und der Zyklusdauer $T_c$. Die Zyklusdauer $T_c$ ist im Allgemeinen konstant. Für die zyklusabhängige Dunkelzeit $T_{d,i}$ gilt im Übrigen

$$T_{d,i} = T_c - T_{t,i} \qquad (4)$$

Gemäß einer alternativen Ausführung der Erfindung kann statt einer Kodierung über die zyklusabhängige Hellzeit $T_{t,i}$ auch eine Kodierung über eine zyklusabhängige Dunkelzeit erfolgen,

Eine Kodierung über die zyklusabhängige Hellzeit $T_{t,i}$ oder über die zyklusabhängige Dunkelzeit kann sowohl in analoger als auch in digitaler Repräsentation mit diskreten Werten erfolgen.

Gemäß einer im Folgenden beschriebenen Ausgestaltung der Erfindung wird eine digitale Repräsentation über die zyklusabhängige Hellzeit $T_{t,i}$ beschrieben. Hierbei wird ein beispielsweise binär darstellbares Symbol mit einer maximalen Länge von $2^{b-1}$, wobei b einer Bitlänge des Symbols entspricht, in die entsprechende digitalisierte Länge einer Hellzeit übertragen. Bei einer statistisch gleichmäßigen Verteilung der Symbole reduziert sich die Gleichung (2) zu

$$\eta = 1 - \frac{T_t^{\max} + T_t^{\min}}{2T_c} \qquad (5)$$

Außerdem gilt

$$T_{t,i} = T_t^{\min} - s_i \cdot \Delta T_s \qquad (6)$$

wobei $\Delta T_s$ einen Zeitunterschied zwischen zwei numerisch aufeinanderfolgenden Werten des Symbols s bedeutet, also beispielsweise der Unterschied zwischen »1« und »2«, »1« und »3« usw. Weiterhin stellt $s_i$ den Wert des Symbols s im Zyklus i dar.

Mit Hilfe von Gleichung (6) vereinfacht sich Gleichung (5) zu

$$\eta = 1 - \frac{T_t^{\min}}{T_c} - \frac{\Delta T_s}{2T_c}(2^b - 1) \qquad (7)$$

Mit Hilfe dieser Gleichung kann somit ein Bezug zwischen dem eingestellten Dimmfaktor $\eta$ und der Bitlänge b eines Symbols gefunden werden. Bei Auflösung der Gleichung (7) nach b ergibt sich

$$b = \left\lfloor lb \left[ 1 + \frac{2T_c}{\Delta T_s} \left( 1 - \eta - \frac{T_t^{\min}}{T_c} \right) \right] \right\rfloor \qquad (8)$$

Die äußerste eckige Klammer bedeutet dabei eine mathematische Operation einer Abrundung zur nächst kleineren natürlichen Zahl.

Figur 2b zeigt dabei die Lösung für den Fall einer Bitlänge von b = 2. Ein arithmetisches Mittel des zyklusabhängigen Dimmfaktors $\eta_i$ entspricht dabei im Wesentlichen dem eingestellten Dimmfaktor $\eta$ gemäß Figur 2a. Mit den Mitteln der Erfindung wird der mittlere Dimmfaktor also nicht verändert.

In Figur 1b ist eine erfindungsgemäße Anordnung zur Übertragung von Daten über eine pulsbreitenmodulierte Lichtquelle dargestellt. Neben den aus Figur 1a bekannten Funktionskomponenten ist ein erfindungsgemäßes Datenmodulationsmodul VLC vorgesehen, dass im Unterschied zur Figur 1a die Größe des zur Helligkeitssteuerung gedachten Dimmfaktors N bzw. $\eta$ entgegennimmt und in Form eines zyklusabhängigen Faktors NI bzw. $\eta_i$ an die Pulsbreitenmodulationseinrichtung PWM weitergibt. Der zyklusabhängige Dimmfaktor NI wird dabei über die an das Datenmodulationsmodul VLC zugeführten Daten DATA moduliert.

Es versteht sich von selbst, dass ein Ausführungsbeispiel gemäß Figur 1b lediglich exemplarisch zu verstehen ist und dass in einer praktischen Realisierung mehrere Lichtquellen vorgesehen sein können.

In einer alternativen Ausführungsform der Erfindung kann die Dunkeltastung direkt an einem Kommunikationsmodul erfolgen.

Durch die erfindungsgemäße Variation des zyklusabhängigen Tastverhältnisses NI bzw. des zyklusabhängigen Dimmfaktors NI von einem Zyklus zum anderen kann mittels eines herkömmlichen Pulsbreitenmodulators PWM bzw. »Dimmer« dem von einer gedimmten Lichtquelle LED ausgesandtem Licht in sehr einfacher Weise Information aufmoduliert werden. Eine zusätzliche »Submodulation« auf den rechteckförmigen Stroms ILED, wie in der Literatur vorgeschlagen, entfällt in vorteilhafter Weise. Dadurch ist durch ein Vorschalten eines Datenmodulationsmoduls VLC in einfachster Weise eine Übertragung von Daten DATA mit einem gewöhnlichen Pulsbreitenmodulator PWM möglich.

Es ist dabei vorteilhaft, den Wert des zyklusabhängigen Dimmfaktors NI so zu wählen, dass dieser für einen Zustand »Idle«, innerhalb dem keine Daten zu übertragen sind, dem jeweiligen arithmetischen Mittelwert gemäß Gleichung (2) entspricht. Dies kann z.B. durch Padding erfolgen, also durch eine Übertragung statistisch zufälliger Rauschdaten. In einer alternativen Ausführungsform ist ein wiederholtes Senden eines Symbols vorgesehen, wobei der dem Symbol entsprechende Dimmfaktor dem vorgegebenen Dimmfaktor N möglichst nahe kommt.

Bei einer praktischen Realisierung der Erfindung wird z.B. eine handelsübliche lichtemittierende Diode mit einer minimal realisierbaren Pulslänge von 4 ns gewählt. Für eine typische Pulsbreitenmodulation ergibt sich eine Wiederholrate von 500 kHz. Mit diesen Parametern ergibt sich somit laut Gleichung (8) eine maximale Bitlänge von 8 und somit eine maximale Datenrate von 4 Mbit/s.

Diese Datenrate kann für einen Dimmfaktor N von 0,5 erreicht werden, während sie für Dimmfaktorwerte von 1 und 0 jeweils Null beträgt. Es ist dabei zu beachten, dass die Datenrate exponentiell von der Abweichung des Dimmfaktor vom Wert 0,5 abhängt.

Um im Fall einer ungedimmten Beleuchtung mit maximaler Helligkeit, also $\eta = 0$, trotzdem Daten zu übertragen, wird gemäß einer weiteren Ausgestaltung der Erfindung wie folgt vorgegangen. Es wird eine binäre Übertragung gewählt, also unter ausschließlicher Verwendung der Werte 0 und 1, wobei $\Delta T_s$ wesentlich kürzer ist als $T_c$.

Weiterhin wird die durchschnittlich emittierte Lichtleistung $P_0$ um $\Delta T_s/2T_c$ erhöht. Da somit die mittlere emittierte Lichtleistung unverändert bleibt, kann auch mit ungedimmtem Licht Information übertragen werden.

Um dem Empfänger der Lichtpulse eine Synchronisation mit der Lichtquelle zu erleichtern und die Werte $T_t^{min}$ und $T_t^{max}$ zu übermitteln, ist gemäß einer weiteren Ausführungsform der Erfindung am Anfang eines Datenblocks ein Senden einer Wiederholung der kürzesten und längsten Symbole vorgesehen.

Falls außerdem eine Übermittlung des Symbolschrittes $\Delta T_s$ geboten ist, kann auch dieser Wert übermittelt werden. So kann beispielsweise vor den eigentlichen Daten und nach der wiederholten Übermittlung von $T_t^{min}$ und $T_t^{max}$ eine vorab vereinbarte Symbolfolge gesendet werden, z.B. »$2^b$-1«, »$2^b$-2«, ... »0«. Aus dieser Symbolfolge kann der Empfänger dann $\Delta T_s$ bestimmen.

Das erfindungsgemäße Verfahren zur optischen Übertragung von Daten verursacht keine elektromagnetischen Wellen und kann auch nicht durch elektromagnetische Wellen beeinflusst werden. Das erfindungsgemäße Verfahren kann insbesondere dann eingesetzt werden, wenn bereits eine LED-Beleuchtung vorgesehen ist. Dabei können die Leuchtdioden beispielsweise mit einem Powerline-Übertragungsverfahren adressiert werden.

Die Übertragung der Daten erfolgt mittels eines leicht abschirmbaren Kommunikationsmediums. Da die Daten optisch übertragen werden, kann man sie beispielsweise leicht mit einer Wand oder einem Vorhang von einer Umgebung abschirmen. Es kann daher eine Abhörsicherheit erreicht werden.

Das erfindungsgemäße Verfahren erlaubt die sichere optische Übertragung von Daten über eine dimmbare Leuchtdiode LED zu tragbaren Endgeräten innerhalb eines beleuchteten Raumes und ist unempfindlich gegenüber Funksignalen. Es können beliebige Leuchtdioden LED eingesetzt werden, beispielsweise Leuchtdioden, die ein weißes Licht erzeugen. Alternativ können auch Lichtdioden mit einer geringeren Modulationsbandbreite als weiße Leuchtdioden eingesetzt werden.

## Patentansprüche

1. Verfahren zur optischen Übertragung von Daten mittels einer pulsbreitenmodulierten Lichtquelle (LED),

   - bei dem ein zur Helligkeitssteuerung der pulsbreitenmodulierten Lichtquelle (LED) eingestelltes Tastverhältnis (N) als Verhältnis zwischen einer Dunkelzeit der Lichtquelle (LED) und einer Periodenlänge eines Pulsbreitenmodulationszyklus definiert ist,
   - bei dem ein zyklusabhängiges Tastverhältnis (NI) über eine Mehrzahl von Pulsbreitenmodulationszyklen jeweils so variiert wird, dass über die variation des zyklusabhängigen Tastverhältnisses (NI) die zu übertragenden Daten (DATA) kodiert werden,
   - bei dem der Wert eines über die Mehrzahl von zyklusabhängigen Tastverhältnissen (NI) gebildeten arithmetischen Mittels im Wesentlichen dem eingestellten Tastverhältnis (N) entspricht,
   - bei dem die Daten in mindestens einem Symbol übertragen werden und wobei ein Symbol durch mindestens ein binäres Bit definierbar ist,
   - bei dem ein Wert eines jeweiligen Symbols zumindest teilweise durch eine Dauer einer Hellzeit (T) der Lichtquelle (LED) innerhalb des Pulsbreitenmodulationszyklus (C) kodiert wird,
   - wobei die Hellzeit (T) innerhalb des Pulsbreitenmodulationszyklus (C) als ein erster Hellzeitbereich und ein zweiter Hellzeitbereich definiert ist,
- wobei der erste Hellzeitbereich über eine Mehrzahl von Pulsbreitenmodulationszyklen (C) konstant ist, und wobei der zweite Hellzeitbereich ein jeweils ganzzahliges Vielfaches eines minimalen zweiten Hellzeitbereichs ist,
- wobei der Wert des ganzzahligen Vielfachs einem dezimalen Wert des Symbols entspricht.

2. Verfahren nach Anspruch 1, wobei die Lichtquelle (LED) eine lichtemittierende Diode ist.

3. Verfahren nach einem der vorgenannten Ansprüche, wobei die Daten drahtlos mit einem mobilen Endgerät ausgetauscht werden.

4. Verfahren nach einem der vorgenannten Ansprüche, wobei ein Wert eines jeweiligen Symbols zumindest teilweise durch eine Dauer der Dunkelzeit der Lichtquelle (LED) innerhalb des Pulsbreitenmodulationszyklus kodiert wird.

5. Verfahren nach einem der vorgenannten Ansprüche, wobei ein Wert eines Symbols zumindest teilweise durch eine Anordnung der Dunkelzeit (D) der Lichtquelle (LED) innerhalb des Pulsbreitenmodulationszyklus (C) kodiert wird.

6. Verfahren nach einem der vorgenannten Ansprüche, wobei bei einem eingestellten Tastverhältnis von Null eine binäre Übertragung erfolgt und wobei der zweite Hellzeitbereich wesentlich kürzer als der Pulsbreitenmodulationszyklus (C) ist.

7. Verfahren nach Anspruch 6, wobei eine optische Leistung der Lichtquelle um einen Faktor erhöht wird, der einem Quotienten aus der Dauer des zweiten Hellzeitbereichs und dem zweifachen Wert des Pulsbreitenmodulationszyklus (C) entspricht.

8. Vorrichtung zur optischen Übertragung von Daten mittels einer pulsbreitenmodulierten Lichtquelle (LED) mit einem Datenmodulationsmodul (VLC)

- zur Entgegennahme von zu übertragenden Daten (DATA) und
- zur jeweiligen Variation eines zyklusabhängigen Tastverhältnis (NI) über eine Mehrzahl von Pulsbreitenmodulationszyklen, dass über die Variation des zyklusabhängigen Tastverhältnisses (NI) die zu übertragenden Daten kodiert werden,
- wobei der Wert eines über die Mehrzahl von zyklusabhängigen Tastverhältnissen (NI) gebildeten arithmetischen Mittels im Wesentlichen dem eingestellten Tastverhältnis (N) entspricht,
- wobei die Daten in mindestens einem Symbol übertragbar sind und wobei ein Symbol durch mindestens ein binäres Bit definierbar ist,
- wobei ein Wert eines jeweiligen Symbols zumindest teilweise durch eine Dauer einer Hellzeit (T) der Lichtquelle (LED) innerhalb des Pulsbreitenmodulationszyklus (C) kodierbar ist,
- wobei die Hellzeit (T) innerhalb des Pulsbreitenmodulationszyklus (C) als ein erster Hellzeitbereich und ein zweiter Hellzeitbereich definiert ist,
- wobei der erste Hellzeitbereich über eine Mehrzahl von Pulsbreitenmodulationszyklen (C) konstant ist, und wobei der zweite Hellzeitbereich ein jeweils ganzzahliges Vielfaches eines minimalen zweiten Hellzeitbereichs ist,
- wobei der Wert des ganzzahligen Vielfachs einem dezimalen Wert des Symbols entspricht.

9. Vorrichtung gemäß Anspruch 8 mit Mitteln zur Ausführung des Verfahrens nach einem der Ansprüche 1 bis 7.


**Claims**

1. Method for optically transmitting data by means of a pulse-width-modulated light source (LED),

- wherein a pulse duty factor (N) set for controlling the brightness of the pulse-width-modulated light source (LED) is defined as a ratio between a blanking of the light source (LED) and a period length of a pulse width modulation cycle,
- wherein a cycle-dependent pulse duty factor (NI) is varied over a plurality of pulse width modulation cycles such that in each case the data (DATA) to be transmitted is encoded by way of the variation of the cycle-dependent pulse duty factor (NI),

- wherein the value of an arithmetic mean formed by way of the plurality of cycle-dependent pulse duty factors (NI) essentially corresponds to the set pulse duty factor (N),
- wherein the data is transmitted in at least one symbol, and wherein a symbol can be defined by at least one binary bit,
- wherein a value of a respective symbol is encoded at least partially by a duration of a bright-up time (T) of the light source (LED) within the pulse width modulation cycle (C),
- wherein the bright-up time (T) is defined within the pulse width modulation cycle (C) as a first bright-up time range and a second bright-up time range,
- wherein the first bright-up time range is constant over a plurality of pulse width modulation cycles (C), and wherein the second bright-up time range is in each case an integer multiple of a minimum second bright-up time range,
- wherein the value of the integer multiple corresponds to a decimal value of the symbol.

2. Method according to claim 1, wherein the light source (LED) is a light-emitting diode.

3. Method according to one of the preceding claims, wherein the data is exchanged wirelessly with a mobile terminal.

4. Method according to one of the preceding claims, wherein a value of a respective symbol is encoded at least partially by a duration of the blanking of the light source (LED) within the pulse width modulation cycle.

5. Method according to one of the preceding claims, wherein a value of a symbol is encoded at least partially by arranging the blanking (D) of the light source (LED) within the pulse width modulation cycle (C).

6. Method according to one of the preceding claims, wherein in the case of a set pulse duty factor of zero a binary transmission takes place and wherein the second bright-up time range is considerably shorter than the pulse width modulation cycle (C).

7. Method according to claim 6, wherein an optical output of the light source is increased by a factor which corresponds to a quotient of the duration of the second bright-up time range and the twofold value of the pulse width modulation cycle (C).

8. Apparatus for optically transmitting data by means of a pulse-width-modulated light source (LED) with a data modulation module (VLC)

- for receiving data (DATA) to be transmitted and
- for the respective variation of a cycle-dependent pulse duty factor (NI) over a plurality of pulse width modulation cycles such that the data to be transmitted is encoded by way of the variation of the cycle-dependent pulse duty factor (NI),
- wherein the value of an arithmetic mean formed by way of the plurality of cycle-dependent pulse duty factors (NI) essentially corresponds to the set pulse duty factor (N),
- wherein the data can be transmitted in at least one symbol and wherein a symbol can be defined by at least one binary bit,
- wherein a value of a respective symbol can be encoded at least partially by a duration of a bright-up time (T) of the light source (LED) within the pulse width modulation cycle (C),
- wherein the bright-up time (T) is defined within the pulse width modulation cycle (C) as a first bright-up time range and a second bright-up time range,
- wherein the first bright-up time range is constant over a plurality of pulse width modulation cycles (C), and wherein the second bright-up time range is in each case an integer multiple of a minimum second bright-up time range,
- wherein the value of the integer multiple corresponds to a decimal value of the symbol.

9. Apparatus according to claim 8, having means for implementing the method according to one of claims 1 to 7.

**Revendications**

1. Procédé de transmission optique de données au moyen d'une source lumineuse (LED) modulée en largeur d'impulsion, selon lequel :

**EP 2 425 557 B1**

- un rapport cyclique (N) réglé pour la commande de la luminosité de la source de lumière (LED) modulée en largeur d'impulsion est défini en tant que rapport entre un temps de non-éclairage de la source lumineuse (LED) et une longueur de période d'un cycle de modulation en largeur d'impulsion ;

- on fait varier un rapport cyclique (NI) dépendant du cycle sur une pluralité de cycles de modulation en largeur d'impulsion respectivement de manière telle que les données à transmettre (DATA) sont codées via la variation du rapport cyclique (NI) dépendant du cycle ;

- la valeur d'une moyenne arithmétique établie sur la pluralité de rapports cycliques (NI) dépendants du cycle correspond sensiblement au rapport cyclique (N) réglé ;

- les données sont transmises dans au moins un symbole, un symbole pouvant être défini par au moins un bit binaire ;

- une valeur d'un symbole respectif est codée au moins en partie par une durée d'un temps d'éclairage (T) de la source lumineuse (LED) dans les limites du cycle de modulation en largeur d'impulsion (C) ;

- le temps d'éclairage (T), dans les limites du cycle de modulation en largeur d'impulsion (C), étant défini en tant que première plage de temps d'éclairage et deuxième plage de temps d'éclairage ;

- la première plage de temps d'éclairage étant constante sur une pluralité de cycles de modulation en largeur d'impulsion (C) et la deuxième plage de temps d'éclairage étant un multiple respectivement entier d'une deuxième plage minimale de temps d'éclairage ;

- la valeur du multiple entier correspondant à une valeur décimale du symbole.

2. Procédé selon la revendication 1, la source lumineuse (LED) étant une diode électroluminescente.

3. Procédé selon l'une des revendications précédentes, les données étant échangées sans fil avec un terminal mobile.

4. Procédé selon l'une des revendications précédentes, une valeur d'un symbole respectif étant codée au moins en partie par une durée du temps de non-éclairage de la source lumineuse (LED) dans les limites du cycle de modulation en largeur d'impulsion.

5. Procédé selon l'une des revendications précédentes, une valeur d'un symbole étant codée au moins en partie par un positionnement du temps de non-éclairage (D) de la source lumineuse (LED) dans les limites du cycle de modulation en largeur d'impulsion (C).

6. Procédé selon l'une des revendications précédentes, une transmission binaire ayant lieu pour un rapport cyclique réglé de zéro et la deuxième plage de temps d'éclairage étant sensiblement plus courte que le cycle de modulation en largeur d'impulsion (C).

7. Procédé selon la revendication 6, une puissance optique de la source lumineuse étant augmentée d'un facteur qui correspond au quotient de la durée de la deuxième plage de temps d'éclairage et du double de la valeur du cycle de modulation en largeur d'impulsion (C).

8. Dispositif de transmission optique de données au moyen d'une source lumineuse (LED) modulée en largeur d'impulsion, comportant un module de modulation de données (VLC)

- pour accepter des données à transmettre (DATA) et

- pour faire varier respectivement un rapport cyclique (NI) dépendant du cycle sur une pluralité de cycles de modulation en largeur d'impulsion de manière telle que les données à transmettre sont codées via la variation du rapport cyclique (NI) dépendant du cycle ;

- la valeur d'une moyenne arithmétique établie sur la pluralité de rapports cycliques (NI) dépendants du cycle correspondant sensiblement au rapport cyclique (N) réglé ;

- les données pouvant être transmises dans au moins un symbole et un symbole pouvant être défini par au moins un bit binaire ;

- une valeur d'un symbole respectif pouvant être codée au moins en partie par une durée d'un temps d'éclairage (T) de la source lumineuse (LED) dans les limites du cycle de modulation en largeur d'impulsion (C) ;

- le temps d'éclairage (T), dans les limites du cycle de modulation en largeur d'impulsion (C), étant défini en tant que première plage de temps d'éclairage et deuxième plage de temps d'éclairage ;

- la première plage de temps d'éclairage étant constante sur une pluralité de cycles de modulation en largeur d'impulsion (C) et la deuxième plage de temps d'éclairage étant un multiple respectivement entier d'une deuxième plage minimale de temps d'éclairage ;

- la valeur du multiple entier correspondant à une valeur décimale du symbole.

**9.** Dispositif selon la revendication 8, comportant des moyens pour exécuter le procédé selon l'une des revendications 1 à 7.

# FIG 1A

# FIG 1B

# FIG 2A

# FIG 2B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008001262 A1